# EUROPÄISCHE PATENTANMELDUNG

(11) **EP 4 487 676 A1**
(43) Veröffentlichungstag der Anmeldung: **08.01.2025**
(21) Anmeldenummer: 24186165.7
(22) Anmeldetag: 03.07.2024
(51) Int. Cl.: A01F 15/02, A01F 15/07, A01F 15/08, B30B 9/30

(54) **VORRICHTUNG UND VERFAHREN ZUR HERSTELLUNG EINES RUNDBALLENS UND RUNDBALLEN**

(30) Priorität: 05.07.2023 DE 102023117754
(71) Anmelder: Naturhof Schröder GmbH, 32469 Petershagen (DE)
(72) Erfinder: SCHRÖDER, Markus, 32469 Petershagen (DE); FRANKE, Johannes Michael, 32469 Petershagen (DE)
(74) Vertreter: Dantz, Jan Henning

(57) **Zusammenfassung**

Eine Vorrichtung (1) zur Herstellung eines Rundballens (20) umfasst eine Zuführstation (I), in der halmförmiges Erntegut, Heu und/oder Stroh auf ein Fördermittel (41) als Materialbahn (40) ablegbar ist, eine Komprimierstation (II, III), in der die Materialbahn (40) zwischen mindestens zwei Druckelementen (52, 53) durchführbar und komprimierbar ist, eine Wickelstation (IV) mit mindestens einem umlaufenden Pressband (43), um eine Presskammer (15), in die die komprimierte Materialbahn (40) einführbar ist, um die komprimierte Materialbahn (40) zu einem Rundballen (20) zu formen, und eine Fixiereinrichtung, mittels der ein Haltemittel um den Rundballen (20) wickelbar ist. Ferner betrifft die Erfindung ein Verfahren zur Herstellung eines Rundballens (20) und einen besonders kompakten Rundballen mit einer Dichte von mindestens 180 kg/m³.

## Beschreibung

Die vorliegende Erfindung betrifft eine Vorrichtung zur Herstellung eines Rundballens, ein Verfahren zur Herstellung eines Rundballens und einen solchen Rundballen.

Aus der EP 331 872 A2 ist eine fahrbare Rundballenpresse zur Aufnahme von Erntegut bekannt, bei der das Erntegut aufgehoben und dann einer Presskammer mit einem schlaufenförmig geführten Pressband zugeführt wird, damit in der Presskammer das Erntegut aufgewickelt werden kann. Die so hergestellten Rundballen besitzen aufgrund der geringen Komprimierung beim Aufwickeln eine geringe Dichte und sind daher nur für eine landwirtschaftliche Anwendung geeignet. Für eine Anwendung für Haustiere sind diese Rundballen wegen des großen Volumens ungeeignet.

Zur Herstellung von locker gewickelten Rundballen offenbart die DE 25 38 164 A1 eine Rundballenpresse auf einem Anhänger, bei dem ein Wickelraum von einem umlaufenden Band umgeben ist.

In der DE 10 2018 007 637 A1 ist eine landwirtschaftliche Rundballenpresse offenbart, bei der eine Presskammer von einem Endlosriemen umgeben ist und eine Steuerung anhand des Durchmessers des Pressballens erfolgen kann. Auch hier besteht das Problem, dass der Pressballen eine geringe Dichte aufweist. Solche Pressballen werden daher in landwirtschaftlichen Betrieben mit großem Volumen hergestellt, aber nicht für Haustiere in einem kleineren Format verwendet.

Es ist daher Aufgabe der vorliegenden Erfindung, eine Vorrichtung und ein Verfahren zur Herstellung eines Rundballens sowie einen solchen Rundballen zu schaffen, der mit hoher Dichte eine besonders kompakte Bauweise besitzt.

Diese Aufgabe wird mit einer Vorrichtung mit den Merkmalen des Anspruches 1, einem Verfahren mit den Merkmalen des Anspruches 9 sowie einem Rundballen mit den Merkmalen des Anspruches 13 gelöst.

Die erfindungsgemäße Vorrichtung zur Herstellung eines Rundballens umfasst eine Zuführstation, in der halmförmiges Erntegut, Heu und/oder Stroh auf einem Fördermittel als Materialbahn ablegbar sind. Die durch Ablegen auf das Fördermittel gebildete Materialbahn wird einer Komprimierstation zugeführt, in der die Materialbahn zwischen mindestens zwei Druckelementen durchgeführt und komprimiert wird. Ferner umfasst die Vorrichtung eine Wickelstation mit mindestens einem umlaufenden Pressband und eine Presskammer, in die die komprimierte Materialbahn einführbar ist, um die komprimierte Materialbahn zu einem Rundballen zu formen, wobei eine Fixiereinrichtung vorgesehen ist, mittels der ein Haltemittel um den Rundballen wickelbar ist. Dadurch kann die Vorrichtung Rundballen in besonders kompakter Bauweise herstellen, da das bahnförmige Erntegut, Heu und/oder Stroh zunächst lose als Materialbahn auf das Fördermittel abgelegt und dann in einem ersten Schritt komprimiert und erst nach der Komprimierung zu einem Rundballen gewickelt wird. Dadurch lässt sich in einem durchgängigen Verfahren aus dem Material ein Rundballen mit hoher Dichte formen.

Vorzugsweise ist das Fördermittel der Zuführstation als Transportband ausgebildet, mittels der die Materialbahn durch die Komprimierstation durchführbar ist. Das bahnförmige Erntegut, Heu und/oder Stroh kann somit lose auf das Transportband aufgegeben werden und wird dann durch dieses Transportband auch durch die Komprimierstation durchgeführt. Die Druckelemente zum Komprimieren der Materialbahn können durch Abschnitte von Transportbändern, Riemen, Gleitflächen oder Druckrollen gebildet sein.

An der Komprimierstation sind bevorzugt mehrere in Förderrichtung und senkrecht hierzu versetzt angeordnete Rollen als Druckelemente vorgesehen, zwischen denen die Materialbahn wellenförmig durchgeführt ist. in der Komprimierstation wird somit nicht nur die Höhe der Materialbahn verringert, sondern das Material wird auch vorgeknickt durch eine wellenförmige Durchführung zwischen den Rollen, wobei die Oberseite der unteren Rollen jeweils höher angeordnet ist als die Unterseite der oberen Rollen, so dass ein wellenförmiger Verlauf zwischen den Rollen entsteht, durch den das Material gebrochen und vorgeknickt wird.

Um die Zuführung von neuem Material steuern zu können, umfasst die Zuführstation vorzugsweise eine Dosiervorrichtung, mittels der die Menge an Material steuerbar ist, die auf das Fördermittel aufgegeben wird. Die Dosiervorrichtung kann dabei eine oder mehrere angetriebene Walzen umfassen, von der das Material auf das Fördermittel abgeworfen wird. Das Formen der Materialbahn hinter der Dosiervorrichtung kann somit durch Schwerkraft erfolgen.

In einer bevorzugten Ausgestaltung umfasst die Wickelstation eine drehbar gelagerte Schwinge mit mindestens einer Führungsrolle, mittels der das Pressband geführt ist. Durch eine Drehbewegung der Schwinge kann die Größe der Presskammer verändert werden. An der Schwinge sind vorzugsweise mindestens zwei Führungsrollen vorgesehen, wobei an einer ersten Führungsrolle das Pressband von einem Umfang der Presskammer weggeführt ist und an einer zweiten Führungsrolle das Pressband zu dem Umfang der Presskammer hingeführt wird. Dadurch ist am Umfang der Presskammer das Pressband durch mindestens zwei verschiedene Abschnitte gebildet, zwischen denen ein Spalt angeordnet ist. Die Führungsrollen für das Pressband können zudem auch Andruckrollen für den Rundballen darstellen, der in der Presskammer angeordnet ist. Dadurch lässt sich der Druck beim Wickeln des Rundballens verändern. Um den Materialverlust durch die Unterteilung des Pressbandes gering zu halten, können an der Schwinge vier Führungsrollen vorgesehen sein, wobei an jeweils zwei Führungsrollen das Pressband weg von der Presskammer geführt ist und an zwei weiteren Führungsrollen ein zu der Presskammer hinlaufender Abschnitt geführt ist. Zwischen den beiden Abschnitten des Pressbandes kann ein Spalt ausgebildet sein, vorzugsweise ein verstellbarer Spalt, so dass nur wenig Material durch den Spalt entweichen kann.

Um eine übermäßige Belastung an der Wickelstation zu vermeiden, kann zwischen der Zuführstation und der Wickelstation eine Entlastungsöffnung vorgesehen sein. Durch die Entlastungsöffnung kann ein Teil des Materials der komprimierten Materialbahn entfernt werden, beispielsweise durch eine angetriebene Walze an einer Oberseite der komprimierten Materialbahn, so dass bei einer Verstopfung überschüssiges Material durch die Entlastungsöffnung nach oben abgeführt werden kann. Zum Abtrag des Materials kann die angetriebene Walze am Umfang profiliert ausgebildet sein. Vorzugsweise wird das abgetrennte Material dann von der Entlastungsöffnung über Transportmittel zu dem Eingang der Zuführstation transportiert, so dass das entfernte Material wieder verwendet werden kann. Die Entlastungsöffnung kann dabei bevorzugt in Bewegungsrichtung der Materialbahn vor einer angetriebenen Walze an einem Eingang zu der Presskammer angeordnet sein.

An einem Eingang zu der Presskammer sind vorzugsweise zwei angetriebene Starterwalzen vorgesehen, zwischen denen die komprimierte Materialbahn durchführbar ist. Die Starterwalzen helfen das Material der Materialbahn besser umzulenken, um dieses dann in der Presskammer aufwickeln zu können.

Die Vorrichtung ist vorzugsweise stationär angeordnet und umfasst ein an einem Boden abgestütztes Maschinengestell. Die Vorrichtung dient somit zur Verarbeitung bereits geernteten Halmgutes, Stroh und/oder Heu, das beispielsweise in Form von Ballen vorhanden ist, die dann durch einen Ballenauflöser wieder aufgetrennt werden, damit das Material zu einem kompakten Rundballen geformt werden kann. Die Vorrichtung ist somit nicht auf einem Fahrzeug oder Anhänger angeordnet, obwohl dies optional auch möglich ist.

Bei dem erfindungsgemäßen Verfahren zur Herstellung eines Rundballens wird zunächst halmförmiges Erntegut, Heu und/oder Stroh auf ein Fördermittel zur Ausbildung einer Materialbahn zugeführt, um dann die Materialbahn zwischen mindestens zwei Druckelementen zu komprimieren und durchführen. Die so komprimierte Materialbahn wird dann in eine Presskammer einer Wickelstation mit einem umlaufenden Pressband zugeführt, damit die komprimierte Materialbahn in der Presskammer zu einem Pressballen aufgewickelt werden kann. Wenn der Rundballen eine ausreichende Größe besitzt, wird ein Haltemittel um den Rundballen angebracht, um dann den fertigen Rundballen aus der Presskammer auszuwerfen. Bei dem erfindungsgemäßen Verfahren erfolgt ein zweistufiges Komprimieren der Materialbahn, nämlich in einem ersten Schritt beim Durchführen und Komprimieren der Materialbahn zwischen den mindestens zwei Druckelementen, so dass die komprimierte Materialbahn der Presskammer zum Aufwickeln des Rundballens zugeführt wird. Mit dem erfindungsgemäßen Verfahren lassen sich somit besonders kompakte Rundballen mit hoher Dichte herstellen.

Über das Pressband wird beim Aufwickeln des Rundballens vorzugsweise ein Druck von 2.000 N bis 3.000 N auf den Rundballen am Ende des Wickelvorgangs aufgebracht. Dadurch lässt sich der Rundballen mit hoher Dichte herstellen. Am Ende des Wickelvorganges kann über einen Sensor die Größe des Durchmessers des Rundballens detektiert werden, damit bei Erreichen der gewünschten Größe die Materialzufuhr angehalten wird, vorzugsweise durch Abschalten des Fördermittels. Das Pressband kann unabhängig von dem Fördermittel weiter angetrieben werden.

Die Materialbahn wird beim Komprimieren vorzugsweise wellenförmig geführt, um die Materialbahn vorzuknicken. Das halmförmige Erntegut, Heu und/oder Stroh wird somit besser aufwickelbar, wenn dieses komprimiert und durch die wellenförmige Verformung flexibler wird.

Das für das Verfahren verwendete Erntegut, Heu und/oder Stroh wird vorzugsweise über einen Ballenauflöser aufbereitet, also von einem bereits bestehenden Ballen verwendet, wobei das Material zerkleinert und dann über eine Dosiervorrichtung dem Fördermittel zugeführt wird.

Eine Zuförderung oder Zuführung des Fördermittels und optional auch eines Druckbandes erfolgt bevorzugt drehzahlgesteuert und wird abhängig von einem Durchmesser des Rundballens geregelt. Auch die vorgeschaltete Dosiervorrichtung kann drehzahlgesteuert abhängig vom Durchmesser des Rundballens geregelt werden, um eine Feindosierung zu generieren. Dadurch kann die Zuführung von Material in die Presskammer vergleichmäßigt und eine Gewichtsvarianz bei der Herstellung des Rundballens reduziert werden.

Ein erfindungsgemäßer Rundballen aus einer gewickelten Materialbahn aus halmförmigem Erntegut, Heu und/oder Stroh, die durch ein Haltemittel in einer in Wesentlichen zylindrischen Form gehalten ist, umfasst eine Dichte von mindestens 180 kg/m³, vorzugsweise eine Dichte zwischen 200 kg/m³ bis 350 kg/m³. Der Rundballen ist somit besonders kompakte ausgebildet und kann effektiv transportiert und gelagert werden.

Vorzugsweise besitzt der Rundballen ein Volumen zwischen 0,5 l bis 20 l, insbesondere zwischen 2 l bis 10 l, so dass der Rundballen eine einfach zu handhabende Größe aufweist und beispielsweise für Haustiere eingesetzt werden kann, insbesondere Kaninchen, Meerschweinchen und andere Nagetiere. Die Rundballen können einfach transportiert und im Handel angeboten werden.

Vorzugsweise ist der Rundballen an gegenüberliegenden Stirnseiten ungeschnitten, so dass keine Beschädigung des Ausgangsmaterials bei der Herstellung des Rundballens erfolgt. Die im Wesentlichen zylindrische Form wird durch Komprimieren der gewickelten Materialbahn erreicht.

Die Erfindung wird nachfolgend anhand eines Ausführungsbeispiels mit Bezug auf die beigefügten Zeichnungen näher erläutert. Es zeigen:

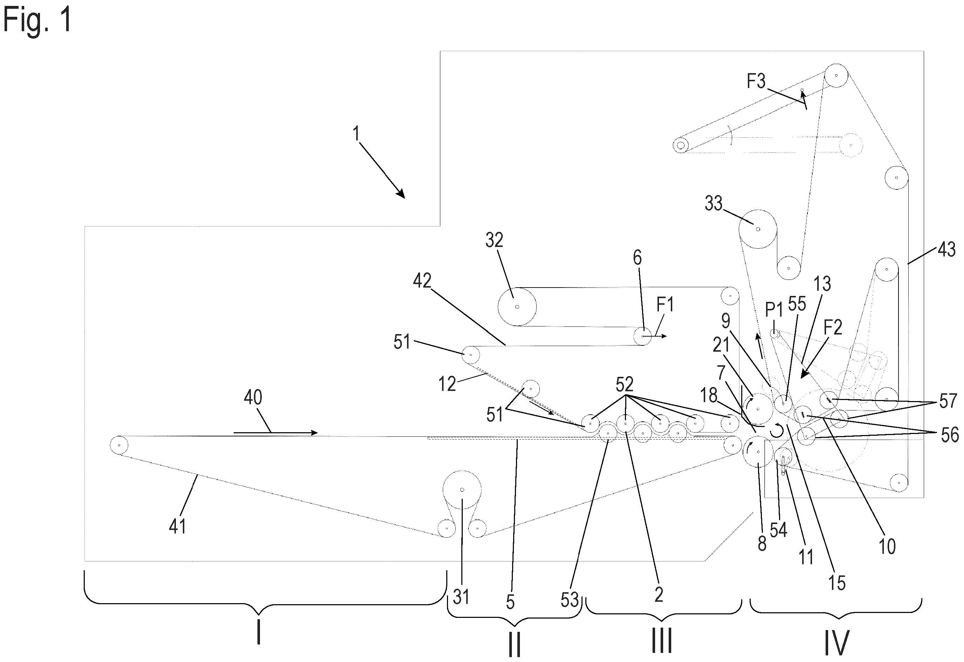

- Figur 1: eine schematische Ansicht einer erfindungsgemäßen Vorrichtung zur Herstellung eines Rundballens, und
- Figuren 2 bis 4: mehrere Ansichten der Wickelstation bei der Herstellung eines Rundballens.

Eine Vorrichtung 1 zur Herstellung eines Rundballens umfasst unterschiedliche Bereiche zur Verarbeitung von halmförmigem Erntegut, Heu und/oder Stroh. Das Ausgangsmaterial kann beispielsweise in Form von Quaderballen vorliegen, die über einen Ballenauflöser und eine Materialaufbereitung zerkleinert, entstaubt und von Fremdpartikeln gereinigt werden. Das aufbereitete Material kann dann über eine Dosierstation gefördert werden, indem die Fördermenge dosiert wird und dann einer Zuführstation I aufgegeben wird. In der Zuführstation I wird das halmförmige Erntegut, Heu und/oder Stroh auf ein Fördermittel 41 in Form eines Transportbandes aufgegeben, so dass das Material lose als Materialbahn 40 vorliegt, die nur schematisch durch den Pfeil angeordnet ist. Das Material wird somit über Schwerkraft oder im Airlaying-Prozess auf das Fördermittel 41 abgelegt.

Von der Zuführstation I wird die Materialbahn 40 zu einer aus zwei Bereichen gebildeten Komprimierstation II und III gefördert, die zwei Teile umfasst. In dem ersten Bereich II der Komprimierstation wird die lose abgelegte Materialbahn 40 durch ein Druckband 42 an der Oberseite überdeckt, das schräg nach unten verläuft, so dass ein keilförmiger Einlaufspalt ausgebildet ist. An gegenüberliegenden Stirnseiten kann dieser Einlaufspalt durch Wandelemente verschlossen sein. Das Druckband 42 ist durch Umlenkrollen 51 geführt, wobei in dem keilförmigen Einlaufschacht statt der Umlenkrollen 51 oder zusätzlich auch Gleitbleche oder andere Druckelemente vorgesehen sein können, um die Höhe der Materialbahn 40 zu verringern. In dem Bereich II findet somit ein Komprimieren der Materialbahn 40 durch das Druckband 42 statt, das von oben auf die Materialbahn 40 drückt. An der Komprimierstation kann in dem Bereich II ein Gleitblech 5 an der Unterseite des Fördermittels 41 vorgesehen sein, damit das Transportband abgestützt ist.

In dem zweiten Bereich III der Komprimierstation wird die vorkomprimierte Materialbahn 40 durch einen Spalt 2 zwischen Druckelementen 52 und 53 geführt, die als Rollen ausgebildet sind. Dabei ist eine Oberseite der unteren Druckelemente 53 höher angeordnet als eine Unterseite der oberen Druckelemente, und die vorkomprimierte Materialbahn 40 wird wellenförmig zwischen den Rollen durchgeführt. Die Druckelemente 52 und 53 können dabei durch Federn, insbesondere mechanisch oder pneumatisch, zu der Materialbahn 40 hin vorgespannt sein, so dass eine weitere Komprimierung der Materialbahn 40 stattfindet. Durch den wellenförmigen Verlauf des Spaltes 2 zwischen Fördermittel 41und dem Druckband 42 wird die komprimierte Materialbahn 40 verformt, und die Halme werden zumindest teilweise gebrochen und weicher gemacht, um den späteren Aufwickelprozess zu erleichtern.

Das Druckband 42 ist über einen Antrieb angetrieben und wird vorzugsweise mit der gleichen Geschwindigkeit bewegt wie das Transportband, das als Fördermittel 41 dient. Das Druckband 42 kann dabei einen Bandspeicher mit einer Rolle 6 aufweisen, die mit einer Vorspannkraft F1 beaufschlagt ist, um die Spannung des Druckbandes 42 auf den gewünschten Wert einzustellen.

Hinter der Komprimierstation II und III ist eine Wickelstation IV angeordnet. Die Wickelstation IV umfasst einen Eingang 7 zu einer Presskammer 15. Der Eingang 7 wird durch eine untere Starterwalze 8 und eine obere Starterwalze 21 gebildet, durch die die komprimierte Materialbahn 40 durchgeführt wird. Zwischen der oberen Starterwalze 21 und dem Ende des Bereiches III der Komprimierstation ist eine Entlastungsöffnung 18 vorgesehen, an der ein Teil des Materials der komprimierten Materialbahn 40 entfernbar ist, beispielsweise wenn zu viel Material auf das Fördermittel 41 aufgegeben wurde. Durch die Entlastungsöffnung 18 kann das entfernte Material durch die Starterwalze 21 und das Druckband 42 nach oben gefördert werden, um dann über das Druckband 42 an einer Umlenkwalze 32 oder einem anderen Abschnitt des Druckbandes 42 der Zuführstation I zuzuführen, also das entfernte Material wird wieder auf das Fördermittel 41 aufgegeben. Die Starterwalzen 21 und 8 können am äußeren Umfang profiliert sein, um den Kontakt zu der komprimierten Materialbahn zu verbessern.

Die Wickelstation IV umfasst eine Presskammer 15, die zumindest teilweise von einem umlaufenden Pressband 43 umgeben ist. Das Pressband 43 ist über eine Vielzahl von Umlenkrollen 33 geführt und kann dabei mit derselben Geschwindigkeit bewegt werden wie die Umfangsgeschwindigkeit der Starterwalzen 21 und 8.

Das Pressband 43 ist auf der zu dem Eingang 7 gegenüberliegenden Seite durch Führungsrollen 56 geführt, die an einer Schwinge 13 gehalten sind. Die Schwinge 13 ist um einen Drehpunkt P1 drehbar gelagert und kann somit bewegt werden, um die Größe der Presskammer 15 zu verändern.

An der Schwinge 13 sind an zwei Führungsrollen 56 zwei Abschnitte des Pressbandes 43 geführt. Ein erster Abschnitt des Pressbandes 43 wird weg von der Presskammer 15 geführt, während ein zweiter Abschnitt zu der Presskammer 15 hingeführt ist. Zwischen den beiden Abschnitten des Pressbandes 43 ist ein Spalt ausgebildet. Das Pressband 43 ist im Bereich der beiden Abschnitte im Wesentlichen parallel geführt, wobei hierfür zwei weitere Führungsrollen 57 an der Schwinge drehbar gelagert sind. Die Führungsrollen 56 und 57 können dabei federnd gelagert sein und sind bevorzugt verstellbar, um den Spalt zwischen den Abschnitten einstellen zu können. Durch einen geringen Spalt wird der Materialverlust beim Aufwickeln des Rundballens verringert.

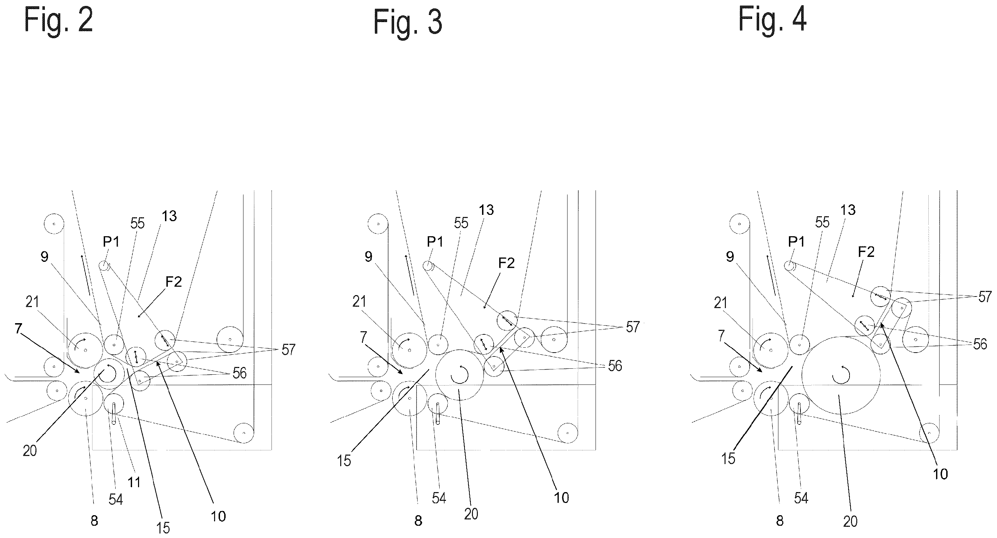

Der Wickelvorgang ist in den Figuren 2 bis 4 im Detail gezeigt.

Die komprimierte Materialbahn 40 wird gemäß Figur 2 durch den Eingang 7 der Presskammer 15 zugeführt, so dass zunächst ein im Durchmesser kleiner Rundballen 20 erzeugt wird, der an einem unteren Abschnitt des Pressbandes 43 und einem oberen Abschnitt des Pressbandes 43 anliegt. Ferner liegt der Rundballen 20 an der untern Starterwalze 8 und der oberen Starterwalze 21 an. Die Umfangsgeschwindigkeit der Starterwalzen 8 und 21 sowie des Pressbandes 43 ist gleich. Das Pressband 43 wird mit einem Abschnitt 9 zwischen der oberen Starterwalze 21 und einer Umlenkrolle 55 durchgeführt.

In Figur 3 ist eine Position der Wickelstation IV gezeigt, in der der Rundballen 20 eine mittlere Größe aufweist. Durch die Vergrößerung des Rundballens hat sich dieser von den Starterwalzen 8 und 21 entfernt, und die Schwinge 13 wurde entgegen dem Uhrzeigersinn um den Drehpunkt P1 verschwenkt. Der Rundballen 20 ist nun zwischen zwei Abschnitten des Pressbandes 43 gehalten, wobei die Schwinge mit den Führungsrollen 56 mittelbar gegen die Oberfläche des Rundballens 20 drückt.

In Figur 4 ist die Position der Wickelstation IV gezeigt, wenn ein Rundballen 20 die gewünschte Größe aufweist. Die Schwinge 13 wurde weiter gegen den Uhrzeigersinn verschwenkt, und der Rundballen 20 liegt an zwei Abschnitten des Pressbandes 43 an. Die Schwinge 13 wird mit einer Kraft F2 gegen den Rundballen 20 gedrückt, und das Pressband 43 kann dann beispielsweise mit einer Kraft von 2.000 N bis 3.000 N am Ende des Wickelprozesses beaufschlagt werden. Dadurch wird der Rundballen 20 beim Wickeln stark komprimiert, wobei die Größe der Kraft durch die Schwinge 13 und des Pressbandes 43 abhängig von der Größe des Rundballens 20 gesteuert werden kann. Die Schwinge 13 kann bevorzugt mit einer Kraft zwischen 0 bis 5000N beaufschlagt werden. Das Pressband 43 kann über ein Spannelement mit einer Kraft F3 an einer Umlenkrolle beaufschlagt werden, so dass das Pressband 43 auf den Rundballen 20 eine Kraft von bis zu 3000N ausübt.

Über einen Sensor kann die Größe des Rundballens 20 detektiert werden. Wenn der gewünschte Durchmesser erreicht ist, kann die Materialzufuhr durch Anhalten des Fördermittels 41 und des Druckbandes 42 gestoppt werden. Das Pressband 43 kann unabhängig von dem Fördermittel 41 und dem Druckband 42 weiter angetrieben werden.

Wenn der Wickelvorgang für den Rundballen 20 abgeschlossen ist, kann ein Haltemittel zugeführt werden, beispielsweise ein Band, Seil, Netz oder ein anderes längliches Element, das um den Rundballen 20 gewickelt wird. Ein Ende des Haltermittels kann optional auch in den Rundballen 20 eingestochen oder durch ein Klebemittel fixiert werden, damit das Ende des Haltemittels fixiert und oder nicht sichtbar ist. Durch das Aufwickeln eines Haltemittels kann der Rundballen in der gewünschten Form gehalten werden.

Wenn der Rundballen 20 fertig ist, kann eine untere Umlenkrolle 54 für das Pressband 43 weggeschwenkt werden, so dass eine Unterseite der Presskammer 15 offen ist und der Rundballen 20 durch die Gewichtskraft nach unten fallen kann. Anschließend wird die Umlenkrolle 54 zurückbewegt, so dass die Presskammer 15 für den nächsten Wickelvorgang einsetzbar ist.

Der so hergestellte Rundballen besitzt vorzugsweise eine Dichte von mindestens 180 kg/m³, beispielsweise eine Dichte zwischen 200 kg/m³ bis 350 kg/m³. Der Rundballen 20 wird vorzugsweise mit einem geringen Volumen hergestellt, beispielsweise zwischen 0,5 l bis 20 l, insbesondere 2 l bis 10 l, so dass der im Wesentlichen zylindrische Rundballen als Tiernahrung für Haustiere und Nagetiere eingesetzt werden kann.

Die Stirnseiten des Rundballens können optional mit Dekorelementen versehen werden, beispielsweise Kräutern, Karotten oder anderen pflanzlichen Elementen, um den Rundballen 20 zu verschönern. Ferner kann der Rundballen 20 in eine Verpackung eingefügt werden.

### Bezugszeichenliste

- 1: Vorrichtung
- 2: Spalt
- 5: Gleitblech
- 6: Rolle
- 7: Eingang
- 8: Starterwalze
- 9: Abschnitt
- 13: Schwinge
- 15: Presskammer
- 18: Entlastungsöffnung
- 20: Rundballen
- 21: Starterwalze
- 32: Umlenkwalze
- 33: Umlenkrolle
- 40: Materialbahn
- 41: Fördermittel
- 42: Druckband
- 43: Pressband
- 51: Umlenkrolle
- 52: Druckelement
- 53: Druckelement
- 54: Umlenkrolle
- 55: Umlenkrolle
- 56: Führungsrolle
- 57: Führungsrolle

- I: Zuführstation
- II: Komprimierstation
- III: Komprimierstation
- IV: Wickelstation
- F1: Vorspannkraft
- F2: Kraft
- F3: Kraft
- P1: Drehpunkt

## Patentansprüche

1. Vorrichtung (1) zur Herstellung eines Rundballens (20) mit einer Zuführstation (I), in der halmförmiges Erntegut, Heu und/oder Stroh auf ein Fördermittel (41) als Materialbahn (40) ablegbar ist;
einer Komprimierstation (II, III), in der die Materialbahn (40) zwischen mindestens zwei Druckelementen (52, 53) durchführbar und komprimierbar ist; einer Wickelstation (IV) mit mindestens einem umlaufenden Pressband (43), um eine Presskammer (15), in die die komprimierte Materialbahn (40) einführbar ist, um die komprimierte Materialbahn (40) zu einem Rundballen (20) zu formen, und einer Fixiereinrichtung, mittels der ein Haltemittel um den Rundballen (20) wickelbar ist.

2. Vorrichtung nach Anspruch 1, **dadurch gekennzeichnet, dass** das Fördermittel (41) der Zuführstation (I) als Transportband ausgebildet ist, mittels dem die Materialbahn (40) durch die Komprimierstation (II, III) durchführbar ist.

3. Vorrichtung nach Anspruch 1 oder 2, **dadurch gekennzeichnet, dass** in der Komprimierstation (II, III) mehrere in Förderrichtung und senkrecht zur Förderrichtung versetzt angeordnete Rollen als Druckelemente (52, 53) vorgesehen sind und die Materialbahn (40) wellenförmig zwischen den Rollen durchgeführt ist.

4. Vorrichtung nach einem der vorhergehenden Ansprüche, **dadurch gekennzeichnet, dass** die Zuführstation (I) eine Dosiervorrichtung umfasst, mittels der die Menge an Material steuerbar ist, die auf das Fördermittel (41) aufgebbar ist.

5. Vorrichtung nach einem der vorhergehenden Ansprüche, **dadurch gekennzeichnet, dass** die Wickelstation (IV) eine drehbar gelagerte Schwinge (13) mit mindestens einer Führungsrolle (56, 57) umfasst, mittels der das Pressband (43) geführt ist und die Größe der Presskammer (15) veränderbar ist und an der Schwinge (13) mindestens zwei Führungsrollen (56) vorgesehen sind und an einer ersten Führungsrolle (56) das Pressband (43) von einem Umfang der Presskammer (15) wegführt und an einer zweiten Führungsrolle (56) das Pressband (43) zu dem Umfang der Presskammer (15) hingeführt wird.

6. Vorrichtung nach Anspruch 5, **dadurch gekennzeichnet, dass** an der Schwinge (13) vier Führungsrollen (56, 57) vorgesehen sind und an jeweils zwei Führungsrollen (56, 57) ein weg von der Presskammer (15) verlaufender Abschnitt des Pressbandes (43) und an zwei Führungsrollen (56, 57) ein zu der Presskammer (15) hin laufender Abschnitt des Pressbandes (43) geführt ist und zwischen den beiden Abschnitten des Pressbandes (43) ein Spalt ausgebildet ist.

7. Vorrichtung nach einem der vorhergehenden Ansprüche, **dadurch gekennzeichnet, dass** zwischen der Zuführstation (I) und der Wickelstation (IV) eine Entlastungsöffnung (18) vorgesehen ist, durch die ein Teil des Materials der komprimierten Materialbahn (40) entfernbar ist, wobei die Entlastungsöffnung (18) in Bewegungsrichtung der Materialbahn (40) bevorzugt vor einer angetriebenen Starterwalze (21) an einem Eingang (7) zu der Presskammer (15) angeordnet ist.

8. Vorrichtung nach einem der vorhergehenden Ansprüche, **dadurch gekennzeichnet, dass** an einem Eingang (7) zu der Presskammer (15) zwei angetriebene Starterwalzen (8, 21) vorgesehen sind, zwischen denen die komprimierte Materialbahn (40) durchführbar ist und/oder die Vorrichtung (1) stationär angeordnet ist und ein an einem Boden abgestütztes Maschinengestell aufweist.

9. Verfahren zur Herstellung eins Rundballens (20) mit den folgenden Schritten:
- Zuführen von Erntegut, Heu und/oder Stroh auf ein Fördermittel (41) zur Ausbildung einer Materialbahn (40);
- Komprimieren und Durchführen der Materialbahn (40) zwischen mindestens zwei Druckelementen (52, 53);
- Zuführen der komprimierten Materialbahn (40) in eine Presskammer (15) einer Wickelstation (IV) mit mindestens einem umlaufenden Pressband (43);
- Aufwickeln der komprimierten Materialbahn (40) in der Presskammer (15) zu einem Rundballen (20);
- Anbringen eines Haltermittels um den Rundballen (20); und
- Auswerfen des Rundballens (20) aus der Presskammer (15).

10. Verfahren nach Anspruch 9, **dadurch gekennzeichnet, dass** das über das Pressband (43) ein Druck von 2.000 N bis 3.000 N auf den Rundballen (20) am Ende des Aufwickelns aufgebracht wird.

11. Verfahren nach Anspruch 9 oder 10, **dadurch gekennzeichnet, dass** die Materialbahn (40) beim Komprimieren wellenförmig geführt wird, um die Materialbahn (40) vorzuknicken.

12. Verfahren nach einem der Ansprüche 9 bis 11, **dadurch gekennzeichnet, dass** das Erntegut, Heu und/oder Stroh über einen Ballenauflöser aufbereitet und zerkleinert wird und dann über eine Dosiervorrichtung dem Fördermittel (41) zugeführt wird und/oder eine Zuförderung des Fördermittels (41) drehzahlgesteuert abhängig von einem Durchmesser des Rundballens (20) geregelt wird.

13. Rundballen (20) aus einer gewickelten Materialbahn (40) aus halmförmigem Erntegut, Heu und/oder Stroh, die durch ein Haltemittel in einer im Wesentlichen zylindrischen Form gehalten ist, **dadurch gekennzeichnet, dass** der Rundballen (20) eine Dichte von mindestens 180 kg/m³ besitzt und die Dichte insbesondere zwischen 200 kg/m³ bis 350 kg/m³ beträgt.

14. Rundballen nach Anspruch 13, **dadurch gekennzeichnet, dass** der Rundballen (20) ein Volumen zwischen 0,5 l bis 20 l, insbesondere zwischen 2 l bis 10 l, aufweist.

15. Rundballen nach einem der Ansprüche 13 oder 14, **dadurch gekennzeichnet, dass** der Rundballen (20) an gegenüberliegenden Stirnseiten ungeschnitten ist.
